(19) **Europäisches Patentamt**
**European Patent Office**
**Office européen des brevets**

(11) **EP 4 328 562 B1**

(12) # EUROPEAN PATENT SPECIFICATION

(45) Date of publication and mention
of the grant of the patent:
**01.10.2025 Bulletin 2025/40**

(21) Application number: **23176797.1**

(22) Date of filing: **01.06.2023**

(51) International Patent Classification (IPC):
***G01N 1/22*** *(2006.01)* ***G01N 15/06*** *(2024.01)*

(52) Cooperative Patent Classification (CPC):
**G01N 15/0618; G01N 1/2273; G01N 15/0643;**
G01N 2001/2288; G01N 2015/0662

(54) **METHOD, APPARATUS, DEVICE AND STORAGE MEDIUM FOR MONITORING ATMOSPHERIC PARTICULATE MATTER**

VERFAHREN, VORRICHTUNG, VORRICHTUNG UND SPEICHERMEDIUM ZUR ÜBERWACHUNG VON ATMOSPHÄRISCHEN PARTIKELN

PROCÉDÉ, APPAREIL, DISPOSITIF ET SUPPORT DE STOCKAGE POUR SURVEILLER UNE MATIÈRE PARTICULAIRE ATMOSPHÉRIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **13.08.2022 CN 202210971941**

(43) Date of publication of application:
**28.02.2024 Bulletin 2024/09**

(73) Proprietor: **Tianjin Zwinsoft Technology Co., Ltd.**
**Tianjin 300000 (CN)**

(72) Inventors:
• **CHEN, Tao**
**Tianjin, 300380 (CN)**
• **CAI, Hongchen**
**Tianjin, 300380 (CN)**

• **CAO, Lifeng**
**Tianjin, 300380 (CN)**
• **SHEN, Qi**
**Tianjin, 300380 (CN)**
• **REN, Yaxian**
**Tianjin, 300380 (CN)**
• **KUERBAN, Alimu**
**Tianjin, 300380 (CN)**

(74) Representative: **Dr. Gassner & Partner mbB**
**Wetterkreuz 3**
**91058 Erlangen (DE)**

(56) References cited:
**EP-A1- 2 937 680       WO-A1-2018/118934**
**US-A1- 2018 017 477**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

# Description

## TECHNICAL FIELD

The present application relates to the field of monitoring atmospheric particulate matter, and in particular to a method, an apparatus, a device and a storage medium for monitoring atmospheric particulate matter.

## BACKGROUND

With the rapid development of the industrialization level, the atmosphere pollution is worsening. Especially in recent years, haze pollution occurs frequently, which directly affects people's health. Therefore, an accurate monitoring of atmospheric particulate matter has become an urgent task.

At present, a beta ray monitoring method is widely used to monitor the atmospheric particulate matter. In monitoring the environment with a low atmospheric particulate matter concentration by using an online monitoring device, the particulate matter in the air is absorbed on a filter membrane, and a sample on the filter membrane is detected. After this detecting, the filter membrane is drove to move for a next sampling and sample detecting. In this way, as a consumable, the filter membrane is used in large quantities, which needs to be supplemented regularly, resulting in high operation and maintenance costs.

In the prior art, there are known some methods or devices as described in their respective documents. The patent application EP2937680A1 discloses an apparatus and method are presented for measuring constituents in a sample. The apparatus includes two or more similar analyzers, with the output of the analyzers combined to provide improved measurements. The apparatus may be, for example, a differential photometric analyzer. The apparatus includes filters for accumulating constituents in a sample flowing through volumes respectively, sensors for measuring light absorption within the filters, and a processor programmed to accept an instrument constant determined at low filter loadings and use the constant to compensate for non-linear instrument responses.

## SUMMARY

To decrease the consumption of the filter membrane, the present application provides a method, an apparatus, a device and a medium for monitoring atmospheric particulate matter. The above-mentioned objectives are solved with the features of independent claims. Further embodiments are defined in the dependent claims.

In a first aspect, a method for monitoring atmospheric particulate matter provided in the present application adopts the following technical solution:

A method for monitoring atmospheric particulate matter , including:

obtaining a first measurement value of a first sampling point on a filter membrane corresponding to a sampling position, wherein the first measurement value is a value measured when a a current sample is attached on the first sampling point;
calculating a concentration value of the atmospheric particulate matter based on the first measurement value;
calculating a concentration value based on the concentration value;
determining whether the concentration value is less than a preset value ;
if the concentration value is less than the preset value, executing a loop process until the concentration value is not less than the preset value, wherein the loop process comprises: obtaining a first measurement value of a first sampling point on a filter membrane, calculating a concentration value of the atmospheric particulate matter based on the first measurement value, calculating a concentration value of the atmospheric particulate matter based on the first measurement value, calculating a concentration value based on the concentration value and determining whether the concentration value is less than the preset value; and
if the concentration value is not less than the preset value, controlling the filter membrane to move such that a second sampling point locates at the sampling position.

By adopting the above technical solution, In monitoring the environment with low atmospheric particulate matter concentration by using an online monitoring device, the concentration value of atmospheric particulate matter is calculated based on the obtained first measurement value, and the concentration value is calculated based on the concentration value, the concentration value is determined whether it is less than the preset value, if it is, it shows that the first sampling point on the filter membrane can be continue using. By reusing the first sampling point on the filter membrane, the number of operations of feeding the filter membrane of the filter membrane is reduced, the consumption of the filter membrane is saved, so that the times of filter membrane replacement is reduced, the frequency of operation and maintenance is cut down, the purpose of cost saving is achieved when the online monitoring equipment is in long term outdoors use. If the concentration value is not less than the preset value, it shows that the concentration value is high, the excessive concentration value of first sampling point on the filter membrane effects the accuracy of measurement result, so that the sampling point should be replaced, the filter membrane is controlled to move such that a second sampling point locates at the sampling position, to enable an accurate measurement to the sample by the online monitoring equipment.

In a possible embodiment, calculating a concentration value of the atmospheric particulate matter based on the first measurement value, comprising:

determining a base measurement value, wherein the base measurement value is a measurement value obtained when measuring the first sampling point on the filter membrane last time; and
calculating the concentration value based on the first measurement value and the base measurement value;
By adopting the above technical solution, the concentration value is calculated based on the second value and the first measurement value, to obtain the concentration value of the sample sampled this time.

In a possible embodiment, .determining a base measurement value , comprises:

if the first sampling point on the filter membrane is measured for the first time, obtaining a first contrast value, and determining the first contrast value as the base measurement value, wherein the first contrast value is a value measured when no sample is attached to the first sampling point on the filter membrane;
if the first sampling point is not measured for the first time, obtaining a second contrast value, and determining the second contrast value as the base measurement value, wherein the second contrast value is a measurement value of the first sampling point on the filter membrane obtained after a previous sample is attached to the first sampling point on the filter membrane and before the a current sample is attached to the first sampling point on the filter membrane, or a measurement value of the first sampling point on the filter membrane obtained when the previous sample is attached to the first sampling point on the filter membrane.

By adopting the above technical solution, if the first sampling point is measured for the first time, it shows that the first sampling point on the filter membrane is used for the first time, the second measured value is a value measured at the time when no sample is attached to the first sampling point on the filter membrane. If the first filter membrane is not measured for the first time, it shows that the first sampling point has been used many times, the second contrast value is a measurement value of the first sampling point on the filter membrane obtained after a previous sample is attached to the first sampling point on the filter membrane and before the a current sample is attached to the first sampling point on the filter membrane. Because if there is a long time interval between two measurements, other particulate matter may be attached to the first sampling point on the filter membrane, which causes an inaccuracy of calculation results, the measurement result will be more accurate as the value is determined to be the second measured value.

In a possible embodiment, calculating the concentration value based on the first measurement value and the base measurement value comprises:

calculating the concentration value by substituting the base measurement value and the first measurement value into a formula;
the formula is as follow:

$$C = \frac{s}{\mu_m V} \ln\left(\frac{I}{I_0}\right) \times 10^{-3}$$

;

wherein, C is the concentration value of the atmospheric particulate matter, s is an effective sampling area of the first sampling point on the filter membrane, V is a volume of a sampling atmosphere, $\mu_m$ is an empirical mass absorption coefficient, I is the first measurement value of the first sampling point on the filter membrane, $I_0$ is the base measurement value of the first sampling point on the filter membrane.

By adopting the above technical solution, the concentration value is calculated based on the second measured value and the first measurement value, to obtain the concentration value of the sample sampled this time.

In a possible embodiment, before executing the loop process, the method further comprises:

determining measurement times of measuring the first sampling point on the filter membrane;
determining whether the measurement times is less than a preset durations;
if the measurement times is not less than the preset durations, controlling the filter membrane to move such that a second sampling point locates at the sampling position.

By adopting the above technical solution, when the measurement times is not less than the preset durations, it shows that first sampling point has been reused many times, even if the concentration value does not reach the preset value, however when the same sampling point has been detected many times, because the location of the sampling point is exposed from the sampling port, it suffers from the effect of other environmental factor in atmospheric environment, so that the measurement result is caused to be not accurate, therefore the filter membrane is controlled to move such that a second sampling point locates at the sampling position, to ensure the accuracy of the measurement result under the condition that the consumption of the filter membrane is reduced.

In a possible embodiment, before executing the loop process, the method further comprises:

determining a measuring duration and a contrast time, wherein the contrast time is a time at which the first contrast value is obtained, and the measuring duration is a time at which the first measurement value is obtained;

determining a measuring duration based on the measuring duration and the contrast time;

determining whether the measuring duration is less than a preset duration;

if the measuring duration is not less than the preset duration, controlling the filter membrane to move such that a second sampling point locates at the sampling position.

By adopting the above technical solution, when the concentration value is less than the preset value, the measuring duration is determined based on the measuring duration and the contrast time, if the measuring duration is not less than the preset duration, it shows that measuring duration is long, when the same sampling point is detected in a long time, because of the exposure of the location of the sampling point from the sampling port, it suffers from the effect of other environmental factor in atmospheric environment, so that the measurement result is caused to be not accurate, therefore the filter membrane is controlled to move such that a second sampling point locates at the sampling position, to ensure the accuracy of the measurement result under the condition that the consumption of the filter membrane is reduced.

In a possible embodiment, the method further comprises:

obtaining a humidity value of a sampling tube;

determining whether the humidity value is less than the preset humidity value;

if the humidity value is not less than the preset humidity value, controlling the filter membrane to move such that a second sampling point locates at the sampling position;

controlling a heating equipment to heat the sampling tube;

repeatedly executing steps of obtaining a humidity value of a sampling tube, determining whether the humidity value is less than the preset humidity value, controlling a heating equipment to heat the sampling tube if the humidity value is not less than the preset humidity value, until the humidity value is less than the preset humidity value.

By adopting the above technical solution, the humidity value is determined whether it is less than the preset humidity value, if it is not, it shows that the humidity value is high, the water in the air may drop to the first sampling point on the filter membrane, which causes an inaccurate measurement result for the first sampling point. Therefore, the filter membrane is controlled to move such that a second sampling point locates at the sampling position, which can reduce the measurement error. When the present humidity value is high, the heating equipment is controlled to heat the sampling tube to evaporate water, so as to prevent the measurement result from being affected after the excessive adsorption of moisture by the first sampling point on the filter membrane. By continuously obtaining the humidity value and determining whether it is less than the preset humidity value, if it is lager, the sampling tube is continuously heated, until the humidity value of the sampling tube is less than the preset humidity value, the affect of the moisture in air to the measurement result is effectively reduced.

In a possible embodiment, before controlling the filter membrane to move such that a second sampling point locates at the sampling position, the method further comprises: .

determining a number of operations of feeding the filter membrane and a total amount of sampling points on the filter membrane.

determining a remaining amount of sampling points, the remaining amount of sampling points is a difference value between the total amount of sampling points and the number of operations of feeding the filter membrane.

determining whether the remaining amount of sampling points is greater than a preset lower limit amount; and

if the remaining amount of sampling points is not greater than the preset lower limit amount, outputting replacement information for informing an operator to replace the filter membrane.

By adopting the above technical solution, the remaining amount of sampling points is determined before the control of paper feeding to the filter membrane, the remaining sampling point is determined whether it is greater than preset lower limit amount, if it is not, it shows that there is no second sampling point on the filter membrane, the replacement information is output, to inform the operator to replace the filter membrane.

In a possible embodiment, after controlling the filter membrane to move such that a second sampling point locates at the sampling position, the method further comprises:

determining moving times of the filter membrane;

generating a time series based on the moving times;

determining an interval times for each two adjacent moving times based on the time series;

calculating an average moving time based on the interval times;

determining a moving frequency based on the average moving time;

calculating an estimated time for replacing a new filter membrane based on the moving frequency and the remaining amount of sampling points; and

outputting the estimated time for replacing a new filter membrane.

By adopting the above technical solution, the time series is generated based on multiple moving instant time, and the interval times is determined based on the time series, the average moving time is calculated based on each interval times, and the moving frequency is determined based on the average moving time, so that the moving frequency is more accurate. The estimated time for replacing a new filter membrane is calculated based on moving frequency and the remaining sampling point, and the estimated time for replacing a new filter membrane is output, to make the operator be informed the replacement time in time, and prepare for the future replacement in advance.

In a second aspect, an apparatus for monitoring atmospheric particulate matter provided in the present application adopts the following technical solution:

An apparatus for monitoring atmospheric particulate matter , including:

a measurement value obtaining module, configured to obtain a first measurement value of a first sampling point on a filter membrane, the first measurement value is a value measured at a time when a a current sample is attached on the first sampling point;

a concentration calculating module, configured to calculate a concentration value of the atmospheric particulate matter based on the first measurement value;

a cumulative calculating module, configured to calculating a concentration value based on the concentration value;

a determining module, configured to determining whether the concentration value is less than a preset value;

a cycle module, configured to execute a loop process, until the concentration value is not less than the preset value, under the condition that the concentration value is less than the preset value, the loop process comprises obtaining a first measurement value of a first sampling point on a filter membrane, calculating a concentration value of the atmospheric particulate matter based on the first measurement value, calculating a concentration value of the atmospheric particulate matter based on the first measurement value, calculating a concentration value based on the concentration value and determining whether the concentration value is less than the preset value; and

a first control module, configured to control the filter membrane to move such that a second sampling point locates at the sampling position, under the condition that the concentration value is not less than the preset value.

By adopting the above technical solution, in monitoring the environment with low atmospheric particulate matter concentration by using an online monitoring device, concentration calculating module calculates the concentration value of the atmospheric particulate matter based on the obtained first measurement value, the cumulative calculating module calculates the cumulative value of the concentration based on the concentration value, the determining module determines whether the cumulative calculating module is less than the preset value, if it is, it shows that the first sampling point on the filter membrane can be continuously used, by reusing the first sampling point on the filter membrane, the number of operations of feeding the filter membrane of the filter membrane is reduced, the consumption of the filter membrane is saved, so that the times of filter membrane replacement is reduced, the frequency of operation and maintenance is cut down, the purpose of cost saving is achieved when the online monitoring equipment is in long term outdoors use. If the concentration value is not less than the preset value, it shows that the concentration value is high, the excessive concentration value of first sampling point on the filter membrane affects the accuracy of measurement result, thus the sampling point should be replaced. For this purpose, a first control module is configured to control the filter membrane to move such that a second sampling point locates at the sampling position, to enable an accurate measurement to the sample by the online monitoring equipment.

In a third aspect, an online monitoring device provided in the present application adopts the following technical solution:

An online monitoring device, the online monitoring device including:

one or more processors;
a memory;
one or more application programs, wherein said one or more application programs are stored in the memory and configured to be executed by said one or more processor to implement the method for monitoring atmospheric particulate matter according to any one of the embodiment in the first aspect.

In a fourth aspect, a computer-readable storage medium provided in the present application adopts the following technical solution:

A computer-readable storage medium, including: a computer program stored thereon, configured to be executed by a processor and implement the method for monitoring atmospheric particulate matter according to any one of embodiment in the first aspect.

In summary, the present application includes at least one of the following beneficial technical effects:

1. In monitoring the environment with low atmospheric particulate matter concentration by using an online monitoring device, the concentration value of atmospheric particulate matter is calculated based on the obtained first measurement value, and the concentration value is calculated based on the concentration value, the concentration value is determined whether it is less than the preset value, if it is, it shows that the first sampling point on the filter membrane can be continue using. By reusing the first sampling point on the filter membrane, the number of operations of feeding the filter membrane of the filter membrane is reduced, the consumption of the filter membrane is saved, so that the times of filter membrane replacement is reduced, the frequency of operation and maintenance is cut down, the purpose of cost saving is achieved when the online monitoring equipment is in long term outdoors use. If the concentration value is not less than the preset value, it shows that the concentration value is high, the excessive concentration value of first sampling point on the filter membrane affects the accuracy of measurement result, and the sampling point should be replaced. Thus, the filter membrane is controlled to move such that a second sampling point locates at the sampling position, to enable an accurate measurement to the sample by the online monitoring equipment;

2. If the first sampling point is measured for the first time, it shows that the first sampling point on the filter membrane is used for the first time, the second measured value is a value measured at the time when no sample is attached to the first sampling point on the filter membrane. If the first filter membrane is not measured for the first time, it shows that the first sampling point has been used many times, he second contrast value is a measurement value of the first sampling point on the filter membrane obtained after a previous sample is attached to the first sampling point on the filter membrane and before the a current sample is attached to the first sampling point on the filter membrane. Because if there is a long time interval between two measurements, other particulate matter may be attached to the first sampling point on the filter membrane, which causes an inaccuracy of calculation results, the measurement result will be more accurate as the value is determined to be the second measured value.

## BRIEF DESCRIPTION OF THE DRAWINGS

FIG.1 is a flow chart of a method for monitoring atmospheric particulate matter according to an embodiment of the present application;
FIG.2 is a block diagram of a device for monitoring atmospheric particulate matter according to an embodiment of the present application;
FIG.3 is a structure diagram of an online monitoring equipment according to an embodiment of the present application.

## DESCRIPTION OF THE EMBODIMENTS

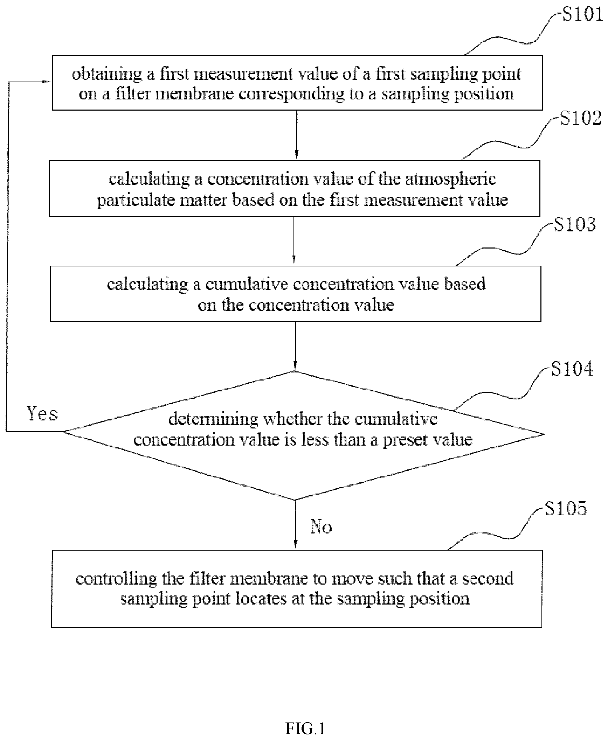

The present application will be further described in detail with reference to the attached figures 1-3 in the following.

To make the purpose, the technical solution, and the advantage of the embodiment in present application more apparent, with reference to the attached figures of embodiment in present application, the technical solution of the embodiment in present application will be clearly and completely described in the following, apparently, the described embodiment is a part of embodiment in present application, not all of the embodiment. Based on the embodiment in present application, all other embodiment obtained by those skilled in the art without inventive labor, belong to the scope of the protection of present application.

In addition, the term "and/or" in present article, is just an association relationship describing associated objects, which indicates that there can be three types of relationships, for example, A and/or B, can represent these three conditions that :A exists alone, A and B exist together, B exists alone. Besides, the character "/" in present article, if it is not in special instruction, it generally represents that the front and back associated objects are in an "or" relationship.

The embodiment of present application will be further described in detail with reference to the figures of specification in the following.

The present application provides a method for monitoring atmospheric particulate matter, which is executed by the online monitoring device. Referring to FIG.1, the method includes step S101, step S102, step S103, step S104, and step S105, in which:

Step S101: obtaining a first measurement value of a first sampling point on a filter membrane corresponding to a sampling position.

In particular, the sampling position is a position, at which a sample is to be located on the online monitoring equipment. The first measurement value is a value measured when a current sample is just attached on the first sampling point. The first sampling point refers to a position point of the filter membrane to be sampled at the present time. The current sample refers to a sample which is being sampled at present time. The first measurement value refers to a measurement value obtained in the present measurement.

In embodiment of present application, the sample of particulate matter in atmosphere is attached to the first sampling point on the filter membrane after sampling by the sampling tube, and then the online monitoring equipment detects a concentration of the atmospheric particulate matter of the sample. In particular, in the process of sampling, the end of the sampling tube contacting with atmosphere has a sampling port, the sampling tube is connected to an air bleed component, optionally, and a suction end of the air bleed component locates on the side wall of the sampling tube. The air bleed component extracts the environment atmosphere with definite volume in the sampling tube along the inlet direction of the sampling port, the extracted atmosphere with particulate matter therein falls at the sampling position and goes through the first sampling point on the filter membrane at the sampling position; the atmosphere is filtered and bled, and the particulate matter is intercepted on the surface of the first sampling point on the filter membrane. When the concentration of the atmospheric particulate matter of the sample is detected by the online monitoring equipment, the first measurement value is obtained according to the attenuation of the particulate matter on the first sampling point of the filter membrane to β ray.

Step S102: calculating a concentration value of the atmospheric particulate matter based on the first measurement value.

In embodiment of present application, after obtaining the first measurement value by the online monitoring equipment, the concentration value of particular matter in the sample is calculated based on the first measurement value, in which, the particulate matter includes TSP, PM10, PM2.5 and so on. Specifically, the concentration value represents the concentration of the sample in single sampling.

Step S103: calculating a concentration value based on the concentration value.

In embodiment of the present application, the online monitoring device summates all of the concentration value calculated from the first sampling point on the filter membrane, to determine the cumulative.

Step S104: determining whether the concentration value is less than a preset value.

In embodiment of present application, the preset value can be obtained from the database by the online monitoring equipment, or manually set, supposing the preset value to be $600ug/m^3$, the online monitoring equipment determines whether the concentration value is less than $600ug/m^3$.

Step S105: controlling the filter membrane to move such that a second sampling point locates at the sampling position.

In embodiment of present application, multiple sampling points are equidistantly arranged on the filter membrane along its length direction. The online monitoring device drives a control motor to move the filter membrane such that a second sampling point locates at the sampling position.

If the online monitoring device determines the cumulative value of concentration is less than a preset value in the step S104, the loop step is executed. In the embodiment of present application, the loop step includes step S101 to step S104. If the present concentration value is $500ug/m^3$, the online monitoring device determines that the concentration value is less than the preset value as $600ug/m^3$, it shows that the first sampling point on the filter membrane can be used continually. The online monitoring device continually obtains the first measurement value of the first sampling point on the filter membrane, the concentration value of the atmospheric particulate matter is calculated based on the first measurement value, the concentration value is calculated based on the concentration value.

If the present concentration value is $550ug/m^3$, the online monitoring device determines that the concentration value is less than the preset value as $600ug/m^3$, it shows that the first sampling point on the filter membrane can be used continually. The online monitoring device continually obtains the first measurement value of the first sampling point on the filter membrane, the concentration value of the atmospheric particulate matter is calculated based on the first measurement value, the concentration value is calculated based on the concentration value.

If the present concentration value is $650ug/m^3$, the online monitoring device determines that the concentration value is less than the preset value as $600ug/m^3$, it shows that the first sampling point on the filter membrane cannot be used continually.

If the online monitoring device determines that the concentration value is not less than the preset value in the step S104, it shows that the first sampling point on the filter membrane cannot be used continually, and the step S105 is executed.

In a possible implement way of embodiment of present application, the step S102 in which the concentration value of the atmospheric particulate matter is calculated based on the first measurement value, particularly includes step S1021 (not illustrated in the figure) and step 1022 (not illustrated in the figure) , in which,

Step S1021: determining a base measurement value.

In particular, the second is a value obtained from last measurement of the first sampling point on the filter membrane.

In embodiment of present application, the base measurement value is determined by the online monitoring device. The base measurement value can show the particular matter concentration sate of the first sampling point on the filter membrane before the sample is attached to the first sampling point on the filter membrane.

Step S1022: calculating the concentration value based on the first measurement value and the base measurement value.

In embodiment of present application, the online monitoring device calculates the concentration based on the base measurement value and the first measurement value, to determine the concentration value of the current sample.

In a possible way of embodiment in present application, determining the base measurement value in step S1021 particularly includes step S1021a (not illustrated in figures), and step S102b(not illustrated in figures), in which:

Step S1021a: if the first sampling point on the filter membrane is measured for the first time, obtaining a first contrast value, and determining the first contrast value as the base measurement value, particularly the first contrast value is a value measured when no sample is attached to the first sampling point on the filter membrane.

Particularly, the first contrast value is a value measured at the time when the sample is not attached to the first sampling point on the filter membrane.

In the embodiment of present application, the online monitoring device determines measurement times of measuring the first sampling point on the filter membrane, and determines whether the measurement times is one, so as to determine whether the first sampling point on the filter membrane is measured for the first time. If the online monitoring device determines that the first sampling point on the filter membrane is measured for the first time, it shows that the first sampling point on the filter membrane is used for the first time. The base measurement value is a value measured at the time when the sample is not attached to the first sampling point on the filter membrane. The online monitoring device obtains the first contrast value, and it stores the value measured at the first sampling point on the filter membrane every time. The first contrast value can be obtained from the data base by the online monitoring device, or from the cloud server from the online monitoring device, which is not limited. After the online monitoring device obtaining the first contrast value, the first contrast value is determined as the base measurement value.

Step S1021b: if the first sampling point is not measured for the first time, obtaining a second contrast value, and determining the second contrast value as the base measurement value.

In the embodiment of present application, if the online monitoring device determines that the first sampling point is not measured for the first time, it shows that the first sampling point on the filter membrane had been used, at least one measurement value of the first sampling point on the filter membrane have been stored in the data base or cloud server. The online monitoring device obtains the second contrast value, particularly, the online monitoring device can obtain the second contrast value from the data base, or from the cloud server, which is not limited. The second contrast value can be a measurement value of the first sampling point on the filter membrane obtained after the previous sample is attached to the first sampling point on the filter membrane and before the a current sample is attached to the first sampling point on the filter membrane. If there is a long time interval between two measurements, other particular matter may be attached to the first sampling point on the filter membrane, which will cause the inaccuracy of the calculation result, therefore, the measurement result will be more accuracy since the measurement value is determined as the base measurement value. The second contrast value can also be the measurement value of the first sampling point on the filter membrane obtained when the previous sample is just attached to the first sampling point on the filter membrane. Compared with measuring again before the present measurement of the concentration value of the sample, measurement times are decreased, which simplifies the measuring processing. After obtaining the second contrast value by the online monitoring device, the second contrast value is determined as the base measurement value. The previous sample particularly refers to the sample which is attached to the filter membrane before the current sample is attached to the filter membrane.

In a possible way of embodiment in present application, calculating the concentration value based on the first measurement value and the base measurement value in the step S1022, particularly includes step S1022a( not illustrated in figures), in which:

Step S1022a, calculating the concentration value by substituting the base measurement value and the first measurement value into a formula.

In particular, the formula is as follow:

$$C = \frac{s}{\mu_m V} \ln\left(\frac{I}{I_0}\right) \times 10^{-3};$$

In particular, C is the concentration value of the atmospheric particulate matter, s is an effective sampling area of the first sampling point on the filter membrane, V is a volume of a sampling atmosphere, $\mu_m$ is an empirical mass absorption coefficient, I is the first measurement value of the first sampling point on the filter membrane, $I_0$ is the base measurement value of the first sampling point on the filter membrane.

In embodiment of present application, after obtaining the base measurement value $I_0$ by the online monitoring device, the online monitoring device calculates the concentration value based on the base measurement value and the first measurement value. Assuming the first measurement value is $I_1$, the online monitoring device substitutes the formula to determine the concentration value.

$$C = \frac{s}{\mu_m V} \ln\left(\frac{I_1}{I_0}\right) \times 10^{-3}.$$

particularly, empirical mass absorption coefficient $\mu_m$ is 0.29.

When the concentration of the first sampling point on the filter membrane is in a next measurement, assuming the first measurement value is $I_3$ and the base measurement value obtained by the online monitoring device is $I_2$, the online monitoring device substitutes the formula to determine the concentration value.

$$C = \frac{s}{\mu_m V} \ln\left(\frac{I_1}{I_0}\right) \times 10^{-3}.$$

In a possible way of embodiment in present application, the method further includes step S130 (not illustrated in figures), step S131 (not illustrated in figures) and step S132 (not illustrated in figures). The step S130 can be executed before step S105, the step S131 and the step S132 can be executed after the step S130, in which, Step S130: determining measurement times of measuring the first sampling point on the filter membrane.

In embodiment of present application, the online monitoring device counts the measurement value obtained from the first sampling point on the filter membrane, every time when the measurement value is obtained, the measurement times will be increased by one by the online monitoring device. The online monitoring device can store the measurement times in the data base or the cloud server, for the acquisition convenience of the online monitoring device.

Step S131: determining whether the measurement times is less than a preset times.

In embodiment of present application, online can obtains the preset times from the data base, or the manual setting. Assuming the preset times are 10, the online monitoring device determines whether the measurement times are less than 10.

Step S132: if the measurement times is not less than the preset times, controlling the filter membrane to move such that a second sampling point locates at the sampling position.

In embodiment of present application, if the online monitoring device determines the measurement times are not less than preset times, it shows that the first sampling point on the filter membrane suffers from a great amount of repeated measurement, although the concentration value is less than the preset value, the sampling point is susceptible to other environmental factor in atmospheric environmental after a great amount of repeated measurement, which causes the inaccuracy of the measurement result. Thus, the online monitoring device controls the filter membrane to move such that a second sampling point locates at the sampling position. The second sampling point particularly refers to a next sampling point relative to the first sampling point.

In a possible way of embodiment in present application, the method further includes the step S106 (not illustrated in figures), the step S107 (not illustrated in figures), the step S108 (not illustrated in figures) and the step S109 (not illustrated in figures). The step S106 can be executed before the step S105, the step S107, the step S108 and the step S109 are executed after the step S106 in tum, in which:
Step S106: determining a measuring time and a contrast time.

Particularly, the contrast time is the time when the first contrast value is obtained, and the measuring time is the time when the first measurement time is obtained.

In embodiment of present application, a obtaining time is determined when the first contrast value is obtained by the online monitoring, and it is marked as the contrast time, similarly, a obtaining time is determined when the first measurement value is obtained by the online monitoring, and it is marked as the measuring time. The contrast time and the measuring time can be uploaded to the database or stored in a storage unit, for the subsequent acquisition convenience of the online monitoring device.

Step S107: determining a measuring duration based on the measuring time and the contrast time.

In embodiment of present application, the online monitoring device determines the measuring duration by making a difference between the measuring time and the contrast time. Assuming the measuring time is 10:00 and the contrast time is 8:00, the measuring duration calculated by the online monitoring device is that: 10:00-8:00=2 hours.

Step S108: determining whether the measuring duration is less than a preset duration.

In embodiment of present application, the online monitoring device can obtain the preset duration from the data base, or the manual setting. Assuming the preset time is 1 hour, and the online monitoring device determines whether the measuring duration is less than 1 hour.

Step S109: if the measuring duration is not less than the preset duration, controlling the filter membrane to move such that a second sampling point locates at the sampling position.

In embodiment of present application, if the online monitoring device determines that the measuring duration is not less than the preset duration, it shows that the first sampling point had been in repeated measurement for a long time, although the concentration value is less than the preset value, the sampling point is susceptible to other environmental factor in atmospheric environmental after a repeated measurement for a long time, which causes the inaccuracy of the measurement result. Thus, the online monitoring device controls the filter membrane to move such that a second sampling point locates at the sampling position.

In a possible way of embodiment in present application, the method further includes step S110 (not illustrated in figures), step S111 (not illustrated in figures), step S112 (not illustrated in figures), step S113 (not illustrated in figures) and step S114 (not illustrated in figures). The step S110 can be executed after any step. The step S111, the step S112 and the step S113 are executed in turn after the step S110, in which:

Step S110: obtaining a humidity value of a sampling tube.
In embodiment of present application, the outer wall of the sampling port of the sampling tube is provided with a humidity detection device, the online monitoring device obtains the humidity value collected by the humidity detection device.
Step S111: determining whether the humidity value is less than the preset humidity value.

In embodiment of present application, the online monitoring device can obtain the preset humidity value from the data base, or the manual setting.

Step S112: if the humidity value is not less than the preset humidity value, controlling the filter membrane to move such that a second sampling point locates at the sampling position.

In embodiment of present application, if the online monitoring device determines that the humidity value is not less than the preset humidity value, it shows that the present humidity value of sampling tube is high, water in the air may drop down to the first sampling point on the filter membrane, which cause the inaccuracy of the detection result. Thus, the online monitoring device controls the filter membrane to move such that a second sampling point locates at the sampling position.

Step S113: controlling a heating equipment to heat the sampling tube.

In embodiment of present application, the heating equipment is an electric heating tube provided on the surrounding of the sampling tube.

Step S114: repeatedly executing steps of obtaining a humidity value of a sampling tube, determining whether the humidity value is less than the preset humidity value, controlling a heating equipment to heat the sampling tube if the humidity value is not less than the preset humidity value, until the humidity value is less than the preset humidity value.

In embodiment of present application, after the sampling tube is heated once by the heating equipment controlled by the online monitoring device, the online monitoring device determines the humidity value of sampling tube again. Assuming the determined humidity value is 85%, taking the preset humidity value 80% in the step S111 as an example, the online monitoring device determines that the humidity value is not less than preset humidity value, and then the sampling tube is heated again by the heating equipment controlled by the online monitoring device.

The humidity value of the sampling tube is determined again by the online monitoring device after heating. Assuming the determined humidity value is 82%, the online monitoring device determines that the humidity value is not less than the preset humidity value 80%, and then the sampling tube is heated again by the heating equipment controlled by the online monitoring device.

The humidity value of the sampling tube is determined again by the online monitoring device. Assuming the determined humidity value is 78%, the online monitoring device determines that the humidity value is less than the preset humidity value 80%, and then the online monitoring doesn't control the heating equipment to heat the sampling tube anymore, and control it off.

In a possible way in embodiment of present application, the method further includes step S118 (not illustrated in figures), step S119 (not illustrated in figures), step S120 (not illustrated in figures) and step S121 (not illustrated in figures). The step S118 can be executed before step S106, step S109, step S112 and step S131. The step S119, step S120, step S121 can be executed after the step S118, in which:

Step S118: determining a number of operations of feeding the filter membrane and a total amount of sampling points on the filter membrane.

In embodiment of present application, after each feeding of the filter membrane, the online monitoring device records a feeding information, the feeding information is stored in the data base or the cloud server, particularly the feeding information includes number of operations of feeding the filter membrane. The online monitoring device can obtain the total amount of sampling point from the data base or the cloud server.

Step S119: determining a remaining amount of sampling points.

In particular, remaining amount of sampling points is the difference between the total amount of sampling points and the number of operations of feeding the filter membrane.

In embodiment of present embodiment, the online monitoring device determines the remaining amount of sampling points by calculating the difference between the total amount of sampling points and the number of operations of feeding the filter membrane. Assuming the total amount of sampling points is 2500 and the number of operations of feeding the filter membrane is 500, then the remaining amount of sampling points calculated by the online monitoring device is that: 2500-500=2000.

Step S120: determining whether the remaining amount of sampling points is greater than a preset lower limit amount.

In embodiment of present application, the preset lower limit amount is 1. The online monitoring device determines whether the remaining amount of sampling points is greater than 1, if it is, it shows that there are still second sampling points on the filter membrane, if it is not, it shows that there is no second sampling point on the filter membrane.

Step S121: if the remaining amount of sampling points is not greater than the preset lower limit amount, outputting replacement information.

In particular, the replacement information is used for informing an operator to replace the filter membrane.

In embodiment of present application, if the online monitoring device determines that the remaining amount of sampling points is not greater than the preset lower limit amount, it shows that there is no second sampling point on the filter membrane, and the filter membrane cannot be fed. The online monitoring device outputs replacement information. The online monitoring device can send a text messages of "please replace the filter membrane" to the terminal equipment of the operator, and also can control the speaker to output voice information of "please replace the filter membrane", to inform the operator to replace the filter membrane.

In a possible way of embodiment in present application, the method further includes step S122 (not illustrated in figures), step S123 (not illustrated in figures), step S124 (not illustrate in figures), step S125 (not illustrated in figures), step S126 (not illustrated in figures), step S127 (not illustrated in figures), and step S128 (not illustrated in figures). The step S122 can be executed after step S106, step S109, step S112 and step S131. The step S123, step S124, step S125, step S126, step S127 and step S128 are executed after step S122, in which,

Step S122: determining moving times of the filter membrane.

In embodiment of present application, taking step S118 as an example, the feeding information recorded in the online monitoring device further includes each moving times of feeding.

Step S123: generating a time series based on the moving times.

In embodiment of present embodiment, assuming 3 moving times included in the feeding information are that 0:00, 10:00 and 20:00, then the time series generated by the online monitoring device is that 0:00, 10:00 and 20:00. An ascending time series, as well as a descending time series, can be generated by the online device according to time sequence.

Step S124: determining an interval time for each two adjacent moving times based on the time series.

In embodiment of present application, taking the time series in step S123 as an example, the interval times determined by the online device is: 10:00-0:00=10 hours; 20:00-10:0 = 10 hours.

Step S125: calculating an average moving time based on the interval times.

In embodiment of present application, taking the interval times in step S124 as an example, an average moving time is calculated by the online device based on the above two 10 hours, which is: (10+10)/2 = 10 hours.

Step S126: determining a moving frequency based on the average moving time.

In embodiment of present application, taking the average moving time in step S125 as an example, if the average moving time is 10 hours, it shows that the filter membrane is fed once every 10 hours; therefore the moving frequency of the online device determined on average moving time is 10 hours.

Step S127: calculating an estimated time for replacing a new filter membrane based on the moving frequency and the remaining amount of sampling points.

In embodiment of present application, the online monitoring device obtains a present time, the present time can be obtained from a built-in clock chip by the online monitoring device, or from the Internet. Assuming that the present time is at 6:00am on July 14, 2022, the remaining amount of sampling point is 600, and the moving frequency is 1 time/10 hours, the estimated time for replacing a new filter membrane determined by the online monitoring device based on the moving frequency and the remaining amount of sampling points is $10 \times 600 = 6000$ hours = 83 days and 8 hours, and the estimated time for replacing a new filter membrane determined by the online monitoring device based on the present time is at 14:00 on October 5, 2022.

Step S128: outputting the estimated time for replacing a new filter membrane.

In embodiment of present application, the estimated time for replacing a new filter membrane is output by the online monitoring device. The estimated time for replacing a new filter membrane can be sent to the terminal device of operator by the online monitoring device, and can be shown on the screen controlled by the online monitoring device, so that the operator can be informed the replacement time, for an advanced preparation of replacement in the future.

The method for monitoring atmospheric particulate matter is provided in above embodiment from the perspective of methods and process, an apparatus for monitoring atmospheric particulate matter will be provided in following embodiment from the perspective of virtual module or virtual unit, which is seen in the following embodiment.

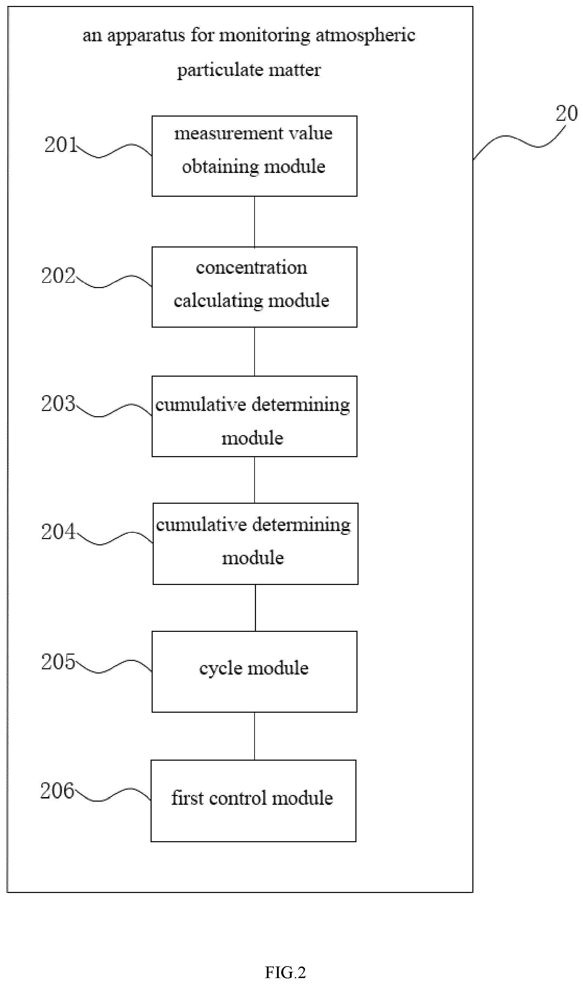

The embodiment of present application provides an apparatus for monitoring atmospheric particulate matter, referring to FIG.2, the apparatus 20 for monitoring atmospheric particulate matter may particularly include:

a measurement value obtaining module 201, the first measurement value is a value measured at a time when a a current sample is just attached on the first sampling point;

a concentration calculating module 202, configured to calculate a concentration value of the atmospheric particulate matter based on the first measurement value;

a cumulative calculating module 203, configured to calculating a concentration value based on the concentration value;

a determining module 204, configured to determining whether the concentration value is less than a preset value;

a cycle module 205, configured to execute a loop process, until the concentration value is not less than the preset value, under the condition that the concentration value is less than the preset value, the loop process comprises obtaining a first measurement value of a first sampling point on a filter membrane, calculating a concentration value of the atmospheric particulate matter based on the first measurement value, calculating a concentration value of the atmospheric particulate matter based on the first measurement value, calculating a concentration value based on the concentration value and determining whether the concentration value is less than the preset value; and

a first control module 206, configured to control the filter membrane to move such that a second sampling point locates at the sampling position, under the condition that the concentration value is not less than the preset value.

In a possible way of embodiment in present application, when calculating a concentration value of the atmospheric particulate matter, the concentration calculating module 202 is particularly configured to:

determine a base measurement value, in which the base measurement value is a measurement value obtained when measuring the first sampling point on the filter membrane last time; calculate the concentration value based on the first measurement value and the base measurement value.

In a possible way of embodiment in present application, when calculating a concentration value of the atmospheric particulate matter based on the first measurement value, the concentration calculating module 202 is particularly configured to:

obtain a first contrast value, and determine the first contrast value as the base measurement value, if the first sampling point on the filter membrane is measured for the first time, in which the first contrast value is a value measured when no sample is attached to the first sampling point on the filter membrane;
obtain a second contrast value, and determine the second contrast value as the base measurement value, if the first sampling point is not measured for the first time, in which the second contrast value is a measurement value of the first sampling point on the filter membrane obtained after the previous sample is attached to the first sampling point on the filter membrane and before the a current sample is attached to the first sampling point on the filter membrane, or a measurement value of the first sampling point on the filter membrane obtained when the previous sample is just attached to the first sampling point on the filter membrane.

In a possible way of embodiment in present application, when calculating the concentration value based on the first measurement value and the base measurement value, the concentration calculating module 202 is particularly configured to:

calculate the concentration value by substituting the base measurement value and the first measurement value into a formula;
the formula is as follow:

$$C = \frac{s}{\mu_m V} \ln\left(\frac{I}{I_0}\right) \times 10^{-3};$$

particularly, C is the concentration value of the atmospheric particulate matter, s is an effective sampling area of the first sampling point on the filter membrane, V is a volume of a sampling atmosphere, $\mu_m$ is an empirical mass absorption coefficient, I is the first measurement value of the first sampling point on the filter membrane, $I_0$ is the base measurement value of the first sampling point on the filter membrane.

In a possible way of embodiment in present application, the apparatus 20 further includes:

a measurement times determining module, configured to determine measurement times of measuring the first sampling point on the filter membrane;
a measurement times comparing module, configured to determine whether the measurement times is less than a preset times;
a fourth control module, configured to control the second sampling point on the filter membrane to move to the first sampling point on the filter membrane, if the measurement times is not less than the preset times.

In a possible way of embodiment in present application, the apparatus further includes:

a time obtaining module, configured to determine a measuring time and a contrast time, in which the contrast time is a time at which the first contrast value is obtained, and the measuring time is a time at which the first measurement value is obtained.
a duration determining module, configured to determine a measuring duration based on the measuring time and the contrast time;
a duration determining module, configured to determine whether the measuring duration is less than a preset duration;
a second control module, configured to control the filter membrane to move such that a second sampling point locates at the sampling position if the measuring duration is not less than the preset duration.

In a possible way of embodiment in present application, the apparatus 20 further includes:

a humidity obtaining module, configured to obtain a humidity value of a sampling tube;
a humidity determining module, configured to determine whether the humidity value is less than the preset humidity value;
a third control module, configured to control the filter membrane to move such that a second sampling point locates at the sampling position, if the humidity value is not less than the preset humidity value;
a heating controlling module, configured to control a heating equipment to heat the sampling tube;
a loop heating module, configured to repeatedly execute steps of obtaining a humidity value of a sampling tube, determine whether the humidity value is less than the preset humidity value and control a heating equipment to heat the sampling tube until the humidity value is less than the preset humidity value, if the humidity value is not less than the preset humidity value.

In a possible way of embodiment in present application, the apparatus 20 further includes:

a filter membrane determining module, configured to determine a number of operations of feeding the filter membrane and a total amount of sampling points on the filter membrane;
a remaining amount determining module, configured to determine a remaining amount of sampling points, the remaining amount of sampling points is a difference value between the total amount of sampling points and the number of operations of feeding the filter membrane;
a remaining amount comparing module, configured to determine whether the remaining amount of sampling points is greater than a preset lower limit amount; and
a first output module, configured to output replacement information for informing an operator to replace the filter membrane, if the remaining amount of sampling points is not greater than the preset lower limit amount.

In a possible way of embodiment in present application, the apparatus 20 further includes:

a moving determining module, configured to determine moving times of the filter membrane;
a series generation module, configured to generate a time series based on the moving times;
an interval determining module, configured to determine an interval time for each two adjacent moving times based on the time series;
a time calculation module, configured to calculate an average moving time based on the interval times;

a frequency determining module, configured to determine a moving frequency based on the average moving time;
a replacement calculating module, configured to calculate an estimated time for replacing a new filter membrane based on the moving frequency and the remaining amount of sampling points; and
a second output module, configured to output the estimated time for replacing a new filter membrane.

In embodiment of present application, the first control module, the second control module, the third control module and the fourth control module can be a same control, different control modules, and partly same control modules. The first output module and the second output module can be a same output module, and can be different output modules.

The person skilled in the art can clear understand that, for the convenience and brevity of description, a detailed working process of system, apparatus and unit in above description, can be referred to corresponding process in above method embodiment, which is not to repeat.

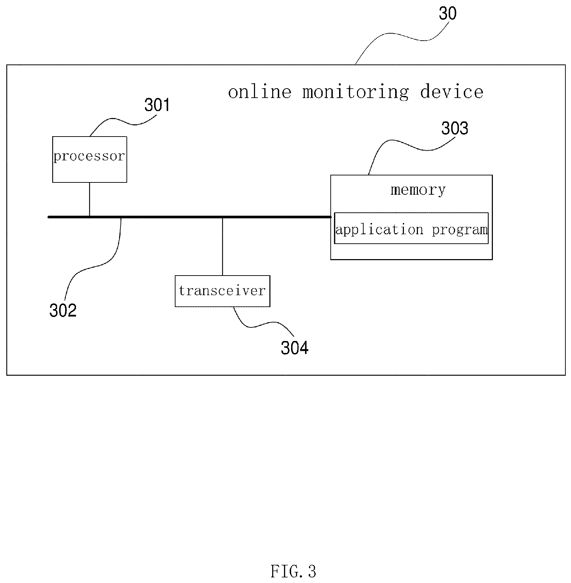

An online monitoring device is provided in embodiment of present application, referring to FIG.3, the online monitoring device 30 illustrated in FIG.3 includes: processor 301 and memory 303. In particular, the processor 301 is coupled to memory 303, such as coupling via bus 302. Optionally, the online monitoring device 30 can also include transceiver 304. It should be appreciated that, transceiver 304 is not limited to one in practical application, the structure of the online monitoring device 30 does not limit the embodiment in present application.

The processor 301 can be CPU (Central Processing Unit), universal processor, DSP (Digital Signal Processor), ASIC (Application Specific Integrated Circuit), FPGA (Field Programmable Gate Array) or other programmable logic device, transistor logic device, hardware parts or any combination of them, which can implement and execute various exemplary logic block, module and circuit. The processor 301 can also be a combination of calculation function implement, such as a combination of one or more processor, and a combination of DSP and micro controller.

The bus 302 can include a path, for an information transfer between above components. The bus 302 can be PCI (Peripheral Component Interconnect) bus, EISA (Extended Industry Standard Architecture) bus and so on. The bus 302 can be divided into address bus, data bus, control bus and so on. For the convenience of illustration, only one thick line is used for illustration in FIG.3, however it does not mean only one bus or one type of bus.

The memory 303 can be ROM (Read Only Memory) or static storage equipment in other types which can store static information and instruction, RAM (Random Access Memory) or dynamic storage device in other types which can store dynamic information and instruction, it also can be EEPROM (Electrically Erasable Programmable Read Only Memory), CD-ROM (Compact Disc Read Only Memory), other compact disc storage, optical disc storage (including compression compact disc, laser disc, optical disc, digital versatile disc, Blue ray disc and so on), disk storage medium, other magnetic storage device, or any other medium who can carry or store desired application programs with structure form of instructions or data, but not limited .

The memory 303 is configured to store the application programs executing present solution, and the processor 301 control it to execute. The processor 301 is configured to execute the application programs stored in memory 303, to implement the content illustrated in above method embodiment.

The embodiment in present application further provides an electronic device, the electronic device can be in wired or wireless connection with online monitoring device, obtain data collected by the online monitoring device, and execute above method. The electronic device can be a server or a terminal device, in which the server can be an independent physical server, a server group or distributed system insist of multiple physical server, or a cloud server providing cloud computing service. The terminal device can be a smartphone, a tablet personal computer, a laptop, or a desktop computer and so on, but not limit.

The embodiment in present application provides a computer-readable storage medium, a computer program is stored thereon, when it runs on the computer, the computer executes corresponding contents in above method embodiment. Compared with related art, when using an online monitoring device in monitoring the environment with low atmospheric particulate matter concentration, the concentration value of atmospheric particulate matter is calculated based on the obtained first measurement value, and the concentration value is calculated based on the concentration value, the concentration value is determined whether it is less than the preset value, if it is, it shows that the first sampling point on the filter membrane can be continue using. By reusing the first sampling point on the filter membrane, the number of operations of feeding the filter membrane of the filter membrane is reduced, the consumption of the filter membrane is saved, so that the times of filter membrane replacement is reduced, the frequency of operation and maintenance is cut down, the purpose of cost saving is achieved when the online monitoring equipment is in long term outdoors use. If the concentration value is not less than the preset value, it shows that the concentration value is high, the excessive concentration value of first sampling point on the filter membrane effects the accuracy of measurement result, so that the sampling point should be replaced, a second sampling point on the filter membrane is controlled to move to the location of the first sampling point on the filter membrane, to enable an accurate measurement to the sample by the online monitoring equipment.

It should be appreciated that, although the steps in the flow chart of drawings are illustrated in order as the arrows indicate, the steps are not necessary to be execute in turn as the arrows indicates. Unless an explicit description is in present application, these steps are not strictly executed in limited turns, which can be executed in other terms. Besides, at least a part of steps in the flow chart of drawings can include multiple substeps or stages, neither substeps or stages are necessary to be executed in the same moment, which can be executed in different moment, nor their execution are necessary to be in turn, which can be executed in turn or alternately with other steps or at least a part of sub steps or stages of other steps.

## Claims

1. A method for monitoring atmospheric particulate matter comprising:

    step S101-1: sampling particulate matter by a sampling tube atmosphere and attaching a sample to a first sampling point on a filter membrane;
    step S101: obtaining a first measurement value of the first sampling point on the filter membrane corresponding to a sampling position, wherein the first measurement value is a value measured when a current sample is attached on the first sampling point, and the first measurement value is a measurement value of attenuation of the particulate matter on the first sampling point of the filter membrane to $\beta$ ray;
    step S102: calculating a concentration value of atmospheric particulate matter based on the first measurement value;
    step S104: determining whether the concentration value is less than a preset value;
    if the concentration value is less than the preset value, repeatedly executing the steps S101-1, S101, S102 and S104 until the concentration value is not less than the preset value; and
    step S105: if the concentration value is not less than the preset value, controlling the filter membrane to move such that a second sampling point locates at the sampling position,
    wherein, the method further comprises:

        obtaining a humidity value of the sampling tube;
        determining whether the humidity value is less than the preset humidity value;
        if the humidity value is not less than the preset humidity value, controlling the filter membrane to move such that the second sampling point locates at the sampling position;

controlling a heating equipment to heat the sampling tube;

repeatedly executing steps of obtaining a humidity value of a sampling tube, determining whether the humidity value is less than the preset humidity value, controlling a heating equipment to heat the sampling tube if the humidity value is not less than the preset humidity value, until the humidity value is less than the preset humidity value.

2. The method for monitoring atmospheric particulate matter according to claim 1, **characterized in that**, the step S102 of calculating the concentration value of the atmospheric particulate matter based on the first measurement value comprises:

determining a base measurement value, wherein the base measurement value is a measurement value obtained when measuring the first sampling point on the filter membrane last time; and

calculating the concentration value based on the first measurement value and the base measurement value.

3. The method for monitoring atmospheric particulate matter according to claim 2, **characterized in that**, determining a base measurement value comprises:

if the first sampling point on the filter membrane is measured for the first time, obtaining a first contrast value, and determining the first contrast value as the base measurement value, wherein the first contrast value is a value measured when no sample is attached to the first sampling point on the filter membrane;

if the first sampling point is not measured for the first time, obtaining a second contrast value, and determining the second contrast value as the base measurement value, wherein the second contrast value is a measurement value of the first sampling point on the filter membrane obtained after a previous sample is attached to the first sampling point on the filter membrane and before the a current sample is attached to the first sampling point on the filter membrane.

4. The method for monitoring atmospheric particulate matter according to claim 2 or 3, **characterized in that**, calculating the concentration value based on the first measurement value and the base measurement value comprises:

calculating the concentration value by substituting the base measurement value and the first measurement value into a formula as following:

$$C = \frac{s}{\mu_m V} \ln\left(\frac{I}{I_0}\right) \times 10^{-3};$$

wherein, C is the concentration value of the atmospheric particulate matter, s is an effective sampling area of the first sampling point on the filter membrane, V is a volume of a sampling atmosphere, $\mu_m$ is an empirical mass absorption coefficient, I is the first measurement value of the first sampling point on the filter membrane, $I_0$ is the base measurement value of the first sampling point on the filter membrane.

5. The method for monitoring atmospheric particulate matter according to claim 1, **characterized in that**, before the step S101, the method further comprises:

determining measurement times of measuring the first sampling point on the filter membrane;

determining whether the measurement times is less than a preset durations;

if the measurement times is not less than the preset durations, controlling the filter membrane to move such that the second sampling point locates at the sampling position.

6. The method for monitoring atmospheric particulate matter according to claim 3, **characterized in that**, before the step S101, the method further comprises:

determining a measuring duration and a contrast time, wherein the contrast time is a time at which the first contrast value is obtained, and the measuring duration is a time at which the first measurement value is obtained;

determining a measuring duration based on the measuring duration and the contrast time;

determining whether the measuring duration is less than a preset duration;

if the measuring duration is not less than the preset duration, controlling the filter membrane to move such that the second sampling point locates at the sampling position.

7. The method for monitoring atmospheric particulate matter according to claim 1, **characterized in that**, before the step S105 of controlling the filter membrane to move such that the second sampling point locates at the sampling position, the method further comprises:

determining number of operations of feeding the filter membrane and a total amount of sampling points on the filter membrane, wherein the operations of feeding the filter membrane comprises driving, by a control motor, the filter membrane to move such that a next sampling point locates at the sampling position;

determining a remaining amount of sampling points, the remaining amount of sampling points is a difference value between the total amount of sampling points and the number of operations of feeding the filter membrane; determining whether the remaining amount of sampling points is greater than a preset lower limit amount; and if the remaining amount of sampling points is not greater than the preset lower limit amount, outputting replacement information for informing an operator to replace the filter membrane.

8. The method for monitoring atmospheric particulate matter according to claim 7, **characterized in that**, after the step S105 of controlling the filter membrane to move such that the second sampling point locates at the sampling position, the method further comprises:

determining time points of moving the filter membrane; generating a time series based on the time points ; determining an interval time for each two adjacent time points based on the time series; calculating an average moving duration based on the interval times; determining a frequency of moving the filter membrane based on the average moving duration; calculating an estimated time for replacing a new filter membrane based on the moving frequency and the remaining amount of sampling points; and outputting the estimated time for replacing a new filter membrane.

9. An apparatus (20) for monitoring atmospheric particulate matter comprising:

a sampling tube, configured to sample particulate matter in atmosphere and attach a sample to a first sampling point on a filter membrane a measurement value obtaining module (201), configured to obtain a first measurement value of the first sampling point on the filter membrane, the first measurement value is a value measured at a time when a a current sample is attached on the first sampling point, and the first measurement value is a measurement value of attenuation of the particulate matter on the first sampling point of the filter membrane to β ray; a concentration calculating module (202), configured to calculate a concentration value of atmospheric particulate matter based on the first measurement value; a determining module (204), configured to determine whether the concentration value is less than a preset value; a cycle module (205), configured to repeatedly enable the sampling tube, the measurement value obtaining module, the concentration calculating module and the determining module to perform function steps thereof respectively, until the concentration value is not less than the preset value; and a first control module (206), configured to control the filter membrane to move such that a second sampling point locates at the sampling position, under the condition that the concentration value is not less than the preset value; a humidity obtaining module, configured to obtain a humidity value of a sampling tube; a humidity determining module, configured to determine whether the humidity value is less than the preset humidity value; a third control module, configured to control the filter membrane to move such that a second sampling point locates at the sampling position, if the humidity value is not less than the preset humidity value; a heating controlling module, configured to control a heating equipment to heat the sampling tube; a loop heating module, configured to repeatedly execute steps of obtaining a humidity value of a sampling tube, determine whether the humidity value is less than the preset humidity value and control a heating equipment to heat the sampling tube until the humidity value is less than the preset humidity value, if the humidity value is not less than the preset humidity value.

10. An online monitoring device (30) comprising:

one or more processors (301); a memory (303); one or more application programs, wherein said one or more application programs are stored in the memory and configured to be executed by said one or more processor to cause the apparatus for monitoring atmospheric particulate matter according to claim 9 to perform the method for monitoring atmospheric particulate matter according to any one of claims 1-8.

11. A computer-readable storage medium with a computer program stored thereon, wherein the computer program is configured to cause the apparatus for monitoring atmospheric particulate matter according to claim 9 to perform the method for monitoring atmospheric particulate matter according to any one of claim 1-8 when being executed by a processor.

**Patentansprüche**

1. Verfahren zur Überwachung von atmosphärischem Feinstaub, umfassend:
Schritt S101-1: Probenahme von Feinstaub aus der Atmosphäre mit einem Probenahmerohr und Anbringen einer Probe an einem ersten Probenahmepunkt auf einer Filtermembran:

   Schritt S101: Ermitteln eines ersten Messwerts des ersten Probenahmepunkts auf der Filtermembran entsprechend einer Probenahmeposition, wobei der erste Messwert ein Wert ist, der gemessen wird, falls eine aktuelle Probe an dem ersten Probenahmepunkt angebracht ist, und der erste Messwert ein Messwert der Abschwächung der des Feinstaubs am ersten Probenahmepunkt der Filtermembran gegenüber β-Strahlen ist;
   Schritt S102: Berechnen eines Konzentrationswerts des atmosphärischen Feinstaubs auf der Grundlage des ersten Messwerts;
   Schritt S104: Feststellen, ob der Konzentrationswert kleiner als ein voreingestellter Wert ist; falls der Konzentrationswert kleiner als der voreingestellte Wert ist, wiederholtes Ausführen der Schritte S101-1, S101, S102 und S104, bis der Konzentrationswert nicht kleiner als der voreingestellte Wert ist; und
   Schritt S105: falls der Konzentrationswert nicht kleiner als der voreingestellte Wert ist, Regeln der Filtermembran, so dass sich ein zweiter Probenahmepunkt an der Probenahmeposition befindet, wobei das Verfahren ferner umfasst:

   Ermitteln eines Feuchtigkeitswerts des Probenahmerohrs;
   Feststellen, ob der Feuchtigkeitswert kleiner als der voreingestellte Feuchtigkeitswert ist;
   falls der Feuchtigkeitswert nicht kleiner als der voreingestellte Feuchtigkeitswert ist, Regeln der Filtermembran, um sie so zu bewegen, dass sich der zweite Probenahmepunkt an der Probenahmeposition befindet;
   Regeln einer Heizvorrichtung, um das Probenahmerohr zu erwärmen;
   wiederholtes Ausführen der Schritte des Ermittelns eines Feuchtigkeitswerts eines Probenahmerohrs, Feststellen, ob der Feuchtigkeitswert kleiner als der voreingestellte Feuchtigkeitswert ist, Regeln einer Heizvorrichtung, um das Probenahmerohr zu erwärmen, falls der Feuchtigkeitswert nicht kleiner als der voreingestellte Feuchtigkeitswert ist, bis der Feuchtigkeitswert kleiner als der voreingestellte Feuchtigkeitswert ist.

2. Verfahren zur Überwachung von atmosphärischem Feinstaub gemäß Anspruch 1, **dadurch gekennzeichnet, dass** der Schritt S102 zum Berechnen des Konzentrationswerts des atmosphärischen Feinstaubs auf der Grundlage des ersten Messwerts umfasst:

   Feststellen eines Basismesswerts, wobei der Basismesswert ein Messwert ist, der bei der letzten Messung des ersten Probenahmepunkts auf der Filtermembran erhalten wurde; und Berechnen des Konzentrationswerts auf der Grundlage des ersten Messwerts und des Basismesswerts.

3. Verfahren zur Überwachung von atmosphärischem Feinstaub gemäß Anspruch 2, **dadurch gekennzeichnet, dass** das Feststellen eines Basismesswerts umfasst:

   falls der erste Probenahmepunkt auf der Filtermembran zum ersten Mal gemessen wird, Erhalten eines ersten Kontrastwerts und Feststellen des ersten Kontrastwerts als Basismesswert, wobei der erste Kontrastwert ein Wert ist, der gemessen wird, falls keine Probe an dem ersten Probenahmepunkt auf der Filtermembran angebracht ist;
   falls der erste Probenahmepunkt nicht zum ersten Mal gemessen wird, Ermitteln eines zweiten Kontrastwerts und Festlegen des zweiten Kontrastwerts als Basismesswert, wobei der zweite Kontrastwert ein Messwert des ersten Probenahmepunkts auf der Filtermembran ist, der nach dem Anbringen einer vorherigen Probe an dem ersten Probenahmepunkt auf der Filtermembran und vor dem Anbringen einer aktuellen Probe an dem ersten Probenahmepunkt auf der Filtermembran ermittelt wurde.

4. Verfahren zur Überwachung von atmosphärischem Feinstaub gemäß Anspruch 2 oder 3, **dadurch gekennzeichnet, dass** das Berechnen des Konzentrationswerts auf der Grundlage des ersten Messwerts und des Basis-Messwerts umfasst:

   Berechnen des Konzentrationswerts durch Einsetzen des Basismesswerts und des ersten Messwerts in eine Formel wie folgt:

$$C = \frac{s}{\mu_m V} \ln\left(\frac{I}{I_0}\right) \times 10^{-3} ;$$

   wobei C der Konzentrationswert des atmosphärischen Feinstaubs ist, s eine effektive Probenahmefläche des ersten Probenahmepunkts auf der Filtermembran ist, V ein Volumen einer Probenahmeatmosphäre ist, $\mu_m$ ein empirischer Massenabsorptionskoeffizient ist, I der erste Messwert des ersten Probenahmepunkts auf der Filtermembran ist, $I_0$ der Basis-Messwert des ersten Probenahmepunkts auf der Filtermembran ist.

5. Verfahren zur Überwachung von atmosphärischem Feinstaub gemäß Anspruch 1, **dadurch gekennzeichnet, dass** vor dem Schritt S101 das Verfahren ferner umfasst:

    Feststellen von Messzeiten für die Messung des ersten Probenahmepunkts auf der Filtermembran;
    Feststellen, ob die Messzeiten kürzer sind als voreingestellte Dauerzeiten;
    falls die Messzeiten nicht kürzer sind als die voreingestellten Dauerzeiten, Regeln der Filtermembran, so dass sich der zweite Probenahmepunkt an der Probenahmeposition befindet.

6. Verfahren zur Überwachung von atmosphärischem Feinstaub gemäß Anspruch 3, **dadurch gekennzeichnet, dass** das Verfahren vor dem Schritt S101 ferner umfasst:

    Festlegen einer Messdauer und einer Kontrastzeit, wobei die Kontrastzeit ein Zeitpunkt ist, zu dem der erste Kontrastwert erhalten wird, und die Messdauer ein Zeitpunkt ist, zu dem der erste Messwert erhalten wird;
    Festlegen einer Messdauer auf der Grundlage der Messdauer und der Kontrastzeit;
    falls die Messdauer nicht kleiner als die voreingestellte Dauer ist, Regeln der Filtermembran, so dass sich der zweite Probenahmepunkt an der Probenahmeposition befindet.

7. Verfahren zum Überwachen von atmosphärischem Feinstaub gemäß Anspruch 1, **dadurch gekennzeichnet, dass** sich vor dem Schritt S105 des Regelns der Filtermembran der zweite Probenahmepunkt an der Probenahmeposition befindet, so dass das Verfahren ferner umfasst:

    Feststellen der Anzahl der Vorgänge zum Zuführen der Filtermembran und einer Gesamtzahl von Probenahmepunkten auf der Filtermembran, wobei die Vorgänge zum Zuführen der Filtermembran das Antreiben der Filtermembran durch einen Regelungsmotor umfassen, so dass sich ein nächster Probenahmepunkt an der Probenahmeposition befindet;
    Feststellen einer Restmenge an Probenahmepunkten, wobei die Restmenge an Probenahmepunkten ein Differenzwert zwischen der Gesamtzahl der Probenahmepunkte und der Anzahl der Vorgänge zum Zuführen der Filtermembran ist;
Feststellen, ob die verbleibende Anzahl von Probenahmestellen größer ist als eine voreingestellte Untergrenze; und
falls die verbleibende Anzahl von Probenahmestellen nicht größer ist als die voreingestellte Untergrenze, Ausgeben von Austauschinformationen, um einen Bediener darüber zu informieren, dass die Filtermembran ausgetauscht werden muss.

8. Verfahren zur Überwachung von atmosphärischem Feinstaub gemäß Anspruch 7, **dadurch gekennzeichnet, dass** nach dem Schritt S105, bei dem die Filtermembran so geregelt wird, dass sich der zweite Probenahmepunkt an der Probenahmeposition befindet, das Verfahren ferner umfasst:

    Feststellen von Zeitpunkten für die Bewegung der Filtermembran;
    Erzeugen einer Zeitreihe auf der Grundlage der Zeitpunkte;
    Feststellen einer Intervallzeit für jeweils zwei benachbarte Zeitpunkte auf der Grundlage der Zeitreihe;
    Berechnen einer durchschnittlichen Bewegungsdauer auf der Grundlage der Intervallzeiten;
    Feststellen einer Bewegungsfrequenz der Filtermembran auf der Grundlage der durchschnittlichen Bewegungsdauer;
    Berechnen einer geschätzten Zeit für das Auswechseln einer neuen Filtermembran auf der Grundlage der Bewegungsfrequenz und der verbleibenden Anzahl von Probenahmepunkten; und
    Ausgeben der geschätzten Zeit für das Auswechseln einer neuen Filtermembran.

9. Vorrichtung (20) zum Überwachen von atmosphärischem Feinstaub, umfassend:

    ein Probenahmerohr, das so konfiguriert ist, dass es Feinstaub in der Atmosphäre entnimmt und eine Probe an einem ersten Probenahmepunkt auf einer Filtermembran anbringt, ein Messwerterfassungsmodul (201), das so konfiguriert ist, dass es einen ersten Messwert des ersten Probenahmepunkts auf der Filtermembran erfasst, wobei der erste Messwert ein Wert ist, der zu einem Zeitpunkt gemessen wird, zu dem eine aktuelle Probe an dem ersten Probenahmepunkt angebracht ist und der erste Messwert ein Messwert der Abschwächung des Feinstaubs am ersten Probenahmepunkt der Filtermembran gegenüber β-Strahlen ist;
ein Konzentrationsberechnungsmodul (202), das so konfiguriert ist, dass es einen Konzentrationswert des atmosphärischen Feinstaubs auf der Basis des ersten Messwerts berechnet;
ein Feststellungsmodul (204), das so konfiguriert ist, dass es feststellt, ob der Konzentrationswert kleiner als ein voreingestellter Wert ist;
ein Zyklusmodul (205), das so konfiguriert ist, dass es das Probenahmerohr, das Messwerterfassungsmodul, das Konzentrationsberechnungsmodul und das Feststellungsmodul wiederholt in die Lage versetzt, ihre jeweiligen Funktionsschritte auszuführen, bis der Konzentrationswert nicht kleiner als der voreingestellte Wert ist; und
ein erstes Reglermodul (206), das so konfiguriert ist, dass es die Filtermembran so regelt, dass sich ein zweiter Probenahmepunkt an der Probenahmeposition befindet, unter der Bedingung, dass der Konzentrationswert nicht kleiner als der voreingestellte Wert ist;
ein Feuchtigkeitsermittlungsmodul, das so konfiguriert ist, dass es einen Feuchtigkeitswert eines Probenahmerohrs ermittelt;
ein Feuchtigkeitsfeststellungsmodul, das so konfiguriert ist, dass es feststellt, ob der Feuchtigkeitswert kleiner als der voreingestellte Feuchtigkeitswert ist;
ein drittes Reglermodul, das so konfiguriert ist, dass es die Filtermembran so regelt, dass sich ein zweiter Probenahmepunkt an der Probenahmeposition befindet, falls der Feuchtigkeitswert nicht kleiner als der voreingestellte Feuchtigkeitswert ist;
ein Heizungsregelungsmodul, das so konfiguriert ist, dass es eine Heizvorrichtung regelt, um das Probenahmerohr zu erwärmen;
ein Schleifenheizungsmodul, das so konfiguriert ist, dass es wiederholt Schritte ausführt, um einen Feuchtigkeitswert eines Probenahmerohrs zu ermitteln, um Feststellen, ob der Feuchtigkeitswert kleiner als der voreingestellte Feuchtigkeitswert ist, und eine Heizvorrichtung zu regeln, um das Probenahmerohr zu erwärmen, bis der Feuchtigkeitswert kleiner als der voreingestellte Feuchtigkeitswert ist, falls der Feuchtigkeitswert nicht kleiner als der voreingestellte Feuchtigkeitswert ist.

10. Online-Überwachungsvorrichtung (30), die Folgendes umfasst:

einen oder mehrere Prozessoren (301);
einen Speicher (303);
ein oder mehrere Anwendungsprogramme, wobei das eine oder die mehreren Anwendungsprogramme im Speicher gespeichert und so konfiguriert sind, dass sie von dem einen oder den mehreren Prozessoren ausgeführt werden, um mit der Vorrichtung zum Überwachen von atmosphärischem Feinstaub gemäß Anspruch 9 das Verfahren zum Überwachen von atmosphärischem Feinstaub gemäß einem der Ansprüche 1 bis 8 durchzuführen.

11. Computerlesbares Speichermedium mit einem darauf gespeicherten Computerprogramm, wobei das Computerprogramm so konfiguriert ist, dass es die Vorrichtung zur Überwachung von atmosphärischem Feinstaub gemäß Anspruch 9 veranlasst, das Verfahren zur Überwachung von atmosphärischem Feinstaub gemäß einem der Ansprüche 1 bis 8 auszuführen, falls es von einem Prozessor ausgeführt wird.

## Revendications

1. Procédé de surveillance de matière particulaire atmosphérique comprenant :

étape S101-1: échantillonnage de matière particulaire à l'aide d'un tube d'échantillonnage dans l'atmosphère et fixation d'un échantillon à un premier point d'échantillonnage sur une membrane filtrante ;
étape S101 : obtention d'une première valeur de mesure du premier point d'échantillonnage sur la membrane filtrante correspondant à une position d'échantillonnage, en ce que la première valeur de mesure est une valeur mesurée lorsqu'un échantillon actuel est fixé sur le premier point d'échantillonnage, et la première valeur de mesure est une valeur de mesure d'atténuation de la matière particulaire sur le premier point d'échantillonnage de la membrane filtrante par rapport au rayon ß ;
étape S102 : calcul d'une valeur de concentration de matière particulaire atmosphérique sur la base de la première valeur de mesure ;
étape S104 : détermination si la valeur de concentration est inférieure à une valeur prédéfinie ;
si la valeur de concentration est inférieure à la valeur prédéfinie, exécution de manière répétée des étapes S101-1, S101, S102 et S104 jusqu'à ce que la valeur de concentration ne soit pas inférieure à la valeur prédéfinie ; et
étape S105 : si la valeur de concentration n'est pas inférieure à la valeur prédéfinie, commande de la membrane filtrante pour qu'elle se déplace de telle sorte qu'un deuxième point d'échantillonnage se trouve à la position d'échantillonnage,
le procédé comprenant en outre :

l'obtention d'une valeur d'humidité du tube d'échantillonnage ;

la détermination si la valeur d'humidité est inférieure à la valeur d'humidité prédéfinie ;

si la valeur d'humidité n'est pas inférieure à la valeur d'humidité prédéfinie, commande de la membrane filtrante pour qu'elle se déplace de telle sorte que le deuxième point d'échantillonnage se trouve à la position d'échantillonnage ;

la commande d'un équipement de chauffage pour chauffer le tube d'échantillonnage ;

l'exécution de manière répétée des étapes consistant à obtenir une valeur d'humidité d'un tube d'échantillonnage, la détermination si la valeur d'humidité est inférieure à la valeur d'humidité prédéfinie ; la commande d'un équipement de chauffage pour chauffer le tube d'échantillonnage si la valeur d'humidité n'est pas inférieure à la valeur d'humidité prédéfinie jusqu'à ce que la valeur d'humidité soit inférieure à la valeur d'humidité prédéfinie.

2. Procédé de surveillance de matière particulaire atmosphérique selon la revendication 1, **caractérisé en ce que** l'étape S102 consistant à calculer la valeur de concentration de la matière particulaire atmosphérique sur la base de la première valeur de mesure comprend :

la détermination d'une valeur de mesure de base, **en ce que** la valeur de mesure de base est une valeur de mesure obtenue lors de la dernière mesure du premier point d'échantillonnage sur la membrane filtrante ; et

le calcul de la valeur de concentration sur la base de la première valeur de mesure et de la valeur de mesure de base.

3. Procédé de surveillance de matière particulaire atmosphérique selon la revendication 2, **caractérisé en ce que** la détermination d'une valeur de mesure de base comprend :

si le premier point d'échantillonnage sur la membrane filtrante est mesurée pour la première fois, l'obtention d'une première valeur de contraste, et la détermination de la première valeur de contraste comme valeur de mesure de base, **en ce que** la première valeur de contraste est une valeur mesurée lorsqu'aucun échantillon n'est fixé au premier point d'échantillonnage sur la membrane filtrante ;

si le premier point d'échantillonnage n'est pas mesuré pour la première fois, l'obtention d'une deuxième valeur de contraste, et la détermination de la deuxième valeur de contraste comme valeur de mesure de base, **en ce que** la deuxième valeur de contraste est une valeur de mesure du premier point d'échantillonnage sur la membrane filtrante obtenue après fixation d'un échantillon précédent sur le premier point d'échantillonnage sur la membrane filtrante et avant fixation de l'échantillon actuel sur le point d'échantillonnage sur la membrane filtrante.

4. Procédé de surveillance de matière particulaire atmosphérique selon la revendication 2 ou 3, **caractérisé en ce que** le calcul de la valeur de concentration sur la base de la première valeur de mesure et de la valeur de mesure de base comprend :

le calcul de la valeur de concentration en substituant la valeur de mesure de base et la première valeur de mesure par une formule comme suit :

$$ C = \frac{s}{\mu_m V} \ln\left(\frac{I}{I_0}\right) \times 10^{-3} ; $$

**en ce que** C est la valeur de concentration de la matière particulaire atmosphérique, s est une zone d'échantillonnage effective du premier point d'échantillonnage sur la membrane filtrante, V est un volume d'une atmosphère d'échantillonnage, $\mu_m$ est un coefficient d'absorption massique empirique, I est la première valeur de mesure du premier point d'échantillonnage sur la membrane filtrante, $I_0$ est la valeur de mesure de base du premier point d'échantillonnage sur la membrane filtrante.

5. Procédé de surveillance de matière particulaire atmosphérique selon la revendication 1, **caractérisé en ce que**, avant l'étape S101, le procédé comprend en outre :

la détermination de moments de mesure de la mesure du premier point d'échantillonnage sur la membrane filtrante ;

la détermination si les moments de mesure sont inférieurs aux durées prédéfinies ;

si les moments de mesure ne sont pas inférieurs aux durées prédéfinies, la commande de la membrane filtrante pour qu'elle se déplace de telle sorte que le deuxième point d'échantillonnage se trouve à la position d'échantillonnage.

6. Procédé de surveillance de matière particulaire atmosphérique selon la revendication 3, **caractérisé en ce que**, avant l'étape S101, le procédé comprend en outre :

la détermination d'une durée de mesure et d'un temps de contraste, **en ce que** le temps de contraste est un temps au cours duquel la valeur de contraste est obtenue, et la durée de mesure est un temps au cours duquel la première valeur de mesure est obtenue ;

la détermination d'une durée de mesure sur la base de la durée de mesure et du temps de contraste ;

la détermination si la durée de mesure est inférieure à une durée prédéfinie ;

si la durée de mesure n'est pas inférieure à la durée prédéfinie, la commande de la membrane filtrante pour qu'elle se déplace de telle sorte que le deuxième point d'échantillonnage se trouve à la position d'échantillonnage.

**7.** Procédé de surveillance de matière particulaire atmosphérique selon la revendication 1, **caractérisé en ce que**, avant l'étape S105 de commande de la membrane filtrante pour qu'elle se déplace de telle sorte que le deuxième point d'échantillonnage se trouve à la position d'échantillonnage, le procédé comprend en outre :

la détermination du nombre d'opérations d'alimentation de la membre filtrante et d'un nombre total de points d'échantillonnage sur la membrane filtrante, **en ce que** les opérations d'alimentation de la membrane filtrante comprennent l'entraînement, par un moteur de commande, de la membrane filtrante pour qu'elle se déplace de telle sorte qu'un point d'échantillonnage suivant se trouve à la position d'échantillonnage ;

la détermination d'un nombre restant de points d'échantillonnage, le nombre restant de points d'échantillonnage étant une valeur différentielle entre le nombre total de points d'échantillonnage et le nombre d'opérations d'alimentation de la membrane filtrante ;

la détermination si le nombre restant de points d'échantillonnage est supérieur à un nombre limite inférieur prédéfini ; et

si le nombre restant de points d'échantillonnage n'est pas supérieur au nombre limite inférieur prédéfini, la sortie d'informations de remplacement pour informer un opérateur de remplacer la membrane filtrante.

**8.** Procédé de surveillance de matière particulaire atmosphérique selon la revendication 7, **caractérisé en ce que**, après l'étape S105 de commande de la membrane filtrante pour qu'elle se déplace de telle sorte que le deuxième point d'échantillonnage se trouve au point d'échantillonnage, le procédé comprend en outre :

la détermination des points temporels de déplacement de la membrane filtrante ;

la génération d'une série temporelle sur la base des points temporels ;

la détermination d'un temps d'intervalle pour chacun des deux points temporels adjacents sur la base de la série temporelle ;

le calcul d'une durée de déplacement moyenne sur la base des temps d'intervalle ;

la détermination d'une fréquence de déplacement de la membrane filtrante sur la base de la durée de déplacement moyenne ;

le calcul d'un temps estimé pour remplacer une nouvelle membrane filtrante sur la base de la fréquence de déplacement et le nombre restant de points d'échantillonnage ; et

la sortie du temps estimé pour remplacer une nouvelle membrane filtrante.

**9.** Appareil (20) permettant la surveillance de matière particulaire atmosphérique comprenant :

un tube d'échantillonnage, conçu pour échantillonner une matière particulaire dans l'atmosphère et fixer un échantillon à un premier point d'échantillonnage sur une membrane filtrante,

un module d'obtention de valeur de mesure (201), conçu pour obtenir un première valeur de mesure du premier point d'échantillonnage sur la membrane filtrante, la première valeur de mesure est une valeur mesurée à un moment où un échantillon actuel est fixé sur le premier point d'échantillonnage, et la première valeur de mesure est une valeur de mesure d'atténuation de la matière particulaire sur le premier point d'échantillonnage de la membrane filtrante par rapport au rayon ß ;

un module de calcul de concentration (202), conçu pour calculer une valeur de concentration de matière particulaire atmosphérique sur la base de la première valeur de mesure ;

un module de détermination (204), conçu pour déterminer si la valeur de concentration est inférieure à une valeur prédéfinie ;

un module de cycle (205), conçu pour activer de manière répétée le tube d'échantillonnage, le module d'obtention de valeur de mesure, le module de calcul de concentration et le module de détermination afin qu'ils exécutent respectivement leurs étapes fonctionnelles, jusqu'à ce que la valeur de concentration ne soit pas inférieure à la valeur prédéfinie ; et

un premier module de commande (206), conçu pour commander le déplacement de la membrane filtrante de telle sorte qu'un deuxième point d'échantillonnage se trouve à la position d'échantillonnage, à condition que la valeur de concentration ne soit pas inférieure à la valeur prédéfinie ;

un module d'obtention d'humidité, conçu pour obtenir une valeur d'humidité d'un tube d'échantillonnage ;

un module de détermination d'humidité, conçu pour déterminer si la valeur d'humidité est inférieure à la valeur d'humidité prédéfinie ;

un troisième module de commande, conçu pour commander le déplacement de la membrane filtrante de telle sorte qu'un deuxième point d'échantillonnage se trouve à la position d'échantillonnage, si la valeur d'humidité n'est pas inférieure à la valeur d'humidité prédéfinie ;

un module de commande de chauffage, conçu pour commander un équipement de chauffage afin de chauffer le tube d'échantillonnage ;

un module de chauffage en boucle, conçu pour exécuter de manière répétée les étapes consistant à obtenir une valeur d'humidité d'un tube d'échantillonnage, à déterminer si la valeur d'humidité est inférieure à la valeur d'humidité prédéfinie et à commander un équipement de chauffage afin de chauffer le tube d'échantillonnage jusqu'à ce que la valeur d'humidité soit inférieure à la valeur d'humidité prédéfinie, si la valeur d'humidité n'est pas inférieure à la valeur d'humidité prédéfinie.

10. Dispositif de surveillance en ligne (30) comprenant :

un ou plusieurs processeurs (301) ;
une mémoire (303) ;
un ou plusieurs programmes d'application, en ce que ledit ou lesdits programmes d'application sont stockés dans la mémoire et configurés pour être exécutés par ledit ou lesdits processeurs afin d'amener l'appareil de surveillance de matière particulaire atmosphérique selon la revendication 9 à exécuter le procédé de surveillance de matière particulaire atmosphérique selon l'une des revendications 1 à 8.

11. Support de stockage lisible par ordinateur sur lequel est enregistré un programme informatique, en ce que le programme informatique est configuré pour amener l'appareil de surveillance de matière particulaire atmosphérique selon la revendication 9 à exécuter le procédé de surveillance de matière particulaire atmosphérique selon l'une des revendications 1 à 8 lorsqu'il est exécuté par un processeur.

FIG.1

FIG.2

30

online monitoring device

301

processor

303

memory

application program

transceiver

302

304

FIG. 3

**EP 4 328 562 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2937680 A1